# EUROPÄISCHE PATENTSCHRIFT

(11) **EP 2 601 421 B1**
(45) Veröffentlichungstag und Bekanntmachung des Hinweises auf die Patenterteilung: **11.09.2019**
(21) Anmeldenummer: 11723003.7
(22) Anmeldetag: 24.05.2011
(51) Int. Cl.: F16C 25/08, F16C 33/66, F16C 35/04

(54) **VERFAHREN ZUM HERSTELLEN VON VARIANTEN EINER BAUREIHE VON LAGERANORDNUNGEN**
METHOD FOR PRODUCING VARIANTS OF A MODEL RANGE OF BEARING ARRANGEMENTS
PROCÉDÉ DE FABRICATION DE VARIANTES D'UNE SÉRIE D'ENSEMBLES PALIER

(30) Priorität: 05.08.2010 DE 102010033450
(43) Veröffentlichungstag der Anmeldung: 12.06.2013
(73) Patentinhaber: SEW-EURODRIVE GmbH & Co. KG, 76646 Bruchsal (DE)
(72) Erfinder: KNAUS, Thomas, 76698 Zeutern (DE); STARK, Michael, 76669 Bad Langenbrücken (DE)
(74) Vertreter: Tüngler, Eberhard
(86) Internationale Anmeldenummer: PCT/EP2011/002578
(87) Internationale Veröffentlichungsnummer: WO 2012/016605

(56) Entgegenhaltungen:
- DE-A1- 2 834 810
- JP-A- 8 035 521
- JP-U- H02 134 318
- US-A- 2 706 667

## Beschreibung

Die Erfindung betrifft ein Verfahren zum Herstellen von Varianten einer Baureihe von Lageranordnungen, eine Lageranordnung und einen Elektromotor.

Es ist bekannt, Wellen über Lager in einem Gehäuseteil von Vorrichtungen zu lagern.

**Beispielsweise ist aus der** JP 8 035521 A **eine Lageranordnung mit Schmierstoffzuführung und Federelementen zum Anstellen der Lager bekannt.**

Der Erfindung liegt die Aufgabe zugrunde, die Lagerung einer Welle zu verbessern.

**Erfindungsgemäß wird die Aufgabe bei dem Verfahren nach den in Anspruch 7, bei der Lageranordnung nach den in Anspruch 1 und bei dem Elektromotor nach den in Anspruch 6 angegebenen Merkmalen gelöst.**

**Von Vorteil ist bei dem Verfahren,** dass bei allen Varianten stets dasselbe Flanschteil verwendbar ist. In diesem sind auch stets Ausnehmungen zur Aufnahme der Druckfedern vorsehbar, insbesondere wobei die Ausnehmungen als Bohrungen ausführbar sind. Somit ist eine einfache kostengünstige Fertigung ausführbar. Durch die Verwendung von Ringfedern sind in Umfangsrichtung beabstandete Ringfedern verwendbar.

Bei einer vorteilhaften Ausgestaltung ist das Flanschteil ein Gehäuseteil. Von Vorteil ist dabei, dass das Flanschteil gehäusebildende Funktion übernimmt und somit der Schmierkanal von außen zugänglich ist und Schmierstoff direkt in den Schmierkanal des Flanschteils einbringbar ist.

Bei einer vorteilhaften Ausgestaltung sind die Ausnehmungen in axialer Richtung weiter ausgedehnt als in radialer Richtung. Von Vorteil ist dabei, dass in Umfangsrichtung zwischen Ausnehmungen eine Beabstandung vorsehbar ist und somit der Schmierkanal im selben axialen Bereich wie die Ausnehmungen anbringbar ist.

Bei einer vorteilhaften Ausgestaltung sind die Ausnehmungen in Umfangsrichtung voneinander beabstandet, wobei der radial verlaufende Schmierkanal, in Umfangsrichtung zwischen zwei zueinander nächstbenachbarten Ausnehmungen angeordnet ist,
insbesondere wobei der vom Schmierkanal überdeckte axiale Bereich ein Teilbereich des Bereichs, welcher von den Ausnehmungen überdeckt wird, ist oder eine nicht verschwindende Schnittmenge mit diesem Bereich aufweist. Von Vorteil ist dabei, dass axialer Bauraum einsparbar ist.

Erfindungsgemäß ist zwischen Flanschteil und Lager ein Ringteil in einer Vertiefung des Flanschteils angeordnet, wobei das Ringteil eine derartige Ausnehmung aufweist, dass der radial verlaufende Schmierkanal in axiale Richtung umgelenkt wird. Von Vorteil ist dabei, dass eine Schmierung des Lagers aus dem Schmierkanal über die Ausnehmungen des Ringteils erfolgt.

Erfindungsgemäß ist zwischen Ringteil und Flanschteil eine in Umlaufrichtung verlaufende Nut gebildet, wobei im Ringteil vorgesehene Ausnehmungen die dem Flanschteil zugewandte Seite mit der dem Flanschteil abgewandten Seite verbindet, insbesondere so dass durch den radial verlaufenden Schmierkanal eintretender Schmierstoff mittels des Radialteils in axiale Richtung umgelenkt wird auf das Lager hin. Von Vorteil ist dabei, dass die Umlenkung aus radialer Richtung in die axiale Richtung ermöglicht ist.

Bei einer vorteilhaften Ausgestaltung ist das Lager bei der ersten Variante ein Kugellager und bei der zweiten Variante ein Zylinderrollenlager. Von Vorteil ist dabei, dass eine Variante mit verstärkter Lagerung herstellbar ist.

Erfindungsgemäß ist das Ringteil mit dem Flanschteil schraubverbunden. Von Vorteil ist dabei, dass das Ringteil derart fixierbar, dass die Welle durch eine zentrische Ausnehmung des Ringteils hindurchführbar ist, insbesondere ohne das Ringteil zu berühren.

Wichtige Merkmale bei der Lageranordnung sind, dass sie hergestellt ist nach einem vorgenannten Verfahren. Von Vorteil ist dabei, dass Gehäuse reduzierbar sind und Schmierstoff bevorratbar ist in den für die Druckfedern vorgesehenen Aufnahmebereichen. Somit sind die Ausnehmungen nutzbar als Speichervolumen für Schmierstoff oder als Aufnahme für Druckfedern zum axialen Anstellen des Lagers und somit Reduzierung der Geräuschbildung bei Betrieb des Lagers. Beim Herstellen der Vorrichtung muss also nur eine einzige Sorte von Flanschteilen bevorratet werden. Bei der Variante mit verstärkter Lagerung ist eine verbesserte Schmierung, nämlich eine Langezeitschmierung, ermöglicht. Das Anstellen des Lagers. Bei der Variante mit Kugellagern ist eine Geräuschreduzierung mittels Anstellen des Lagers durch Druckfedern ermöglicht.

Wichtige Merkmale bei dem Elektromotor mit einer solchen Lageranordnung sind, dass diese Lageranordnung auf der abtreibenden Seite des Elektromotors anordenbar ist, also als Festlager ausführbar ist. Das entsprechende Loslager befindet sich auf der von der Abtriesseite abgewandten Seite.

Von Vorteil ist dabei, dass thermische Ausdehnungen kompensierbar sind, insbesondere Längenveränderungen der Welle.

Die Erfindung wird nun anhand von Abbildungen näher erläutert:
In der Figur 1 ist ein Ausführungsbeispiel gezeigt, bei dem kein Distanzelement zwischen Lager 3 und Flanschteil 1 angeordnet ist.
In der Figur 2 ist ein erfindungsgemäßes Ausführungsbeispiel gezeigt, bei dem ein Distanzring 20 eingesetzt und eine Nachschmierbohrung mit Schmierkanal 4 vorgesehen ist.
In der Figur 3 ist das als Distanzring vorsehbare Ringteil 20 in Schrägansicht gezeigt.
In der Figur 4 ist ein erfindungsgemäßes Ausführungsbeispiel gezeigt, bei dem eine verstärkte Lagerung eingesetzt ist, insbesondere mit einem Zylinderrollenlager 40.

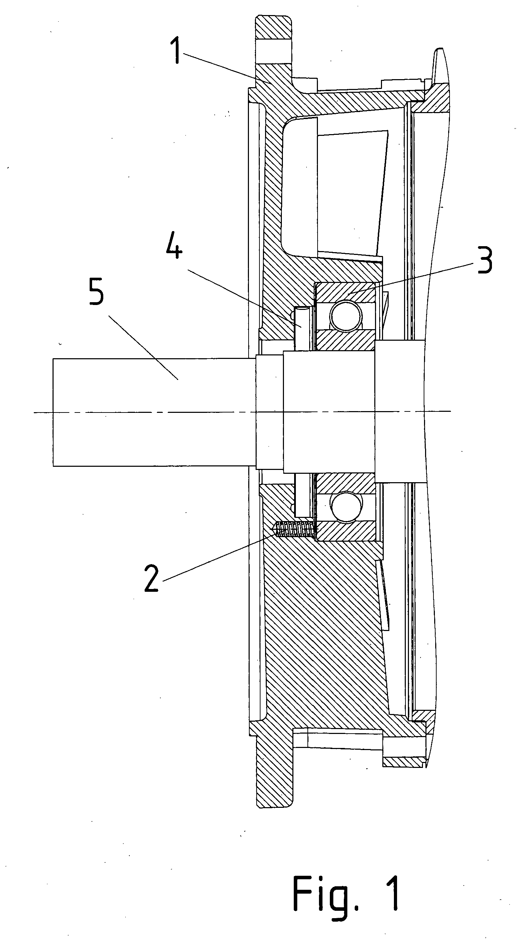

Wie in Figur 1 gezeigt ist eine Welle 5 der Vorrichtung, insbesondere eines Elektromotors, drehbar gelagert an einem im Flanschteil 1 angeordneten Lager 3, das als Kugellager ausgeführt ist. Ein weiteres Lager der Welle 5, welches in einem mit dem Flanschteil 1 verbundenen Gehäuseteil angeordnet ist, ist nicht gezeigt.

Eine Nachschmierung, also eine Schmierstoffzuführung im Betrieb, also nach Herstellung und Inbetriebnahme des Motors, ist nicht vorhanden.

Mittels in Umfangsrichtung hintereinander angeordneter Druckfedern 2 wird der Außenring des Lagers 3 in axialer Richtung weg vom Flanschteil 1 gedrückt. Denn die Druckfedern 2 stützen sich am Flanschteil 1 ab und drücken auf den Außenring des Lagers 3.

Da das Lager 3 als Kugellager ausgeführt ist, wird auch der Innenring des Lagers 3 in dieser axialen Richtung weggedrückt und somit gegen eine Stufe der Welle 5 gedrückt.

Auf diese Weise ist also das Lager angestellt und die Geräusche beim Betrieb der Vorrichtung, also Drehbewegung der Welle 5, sind reduziert.

Als Druckfedern 2 sind Ringfedern einsetzbar, die sehr klein ausführbar sind. Außerdem ist wichtig, dass sie radial außerhalb einer Vertiefung angeordnet sind, die zur Aufnahme eines Distanzrings vorgesehen ist, welcher zwischen Flanschteil und Innenring des Lagers 3 anordenbar ist.

Das Flanschteil 1 weist zur Aufnahme des Außenrings des Lagers 3 eine Bohrung auf, die derart gestuft ausgeführt ist, dass als eine axial weiter zum Flanschteil angeordnete Bohrungsstufe die Vertiefung ausgeführt ist.

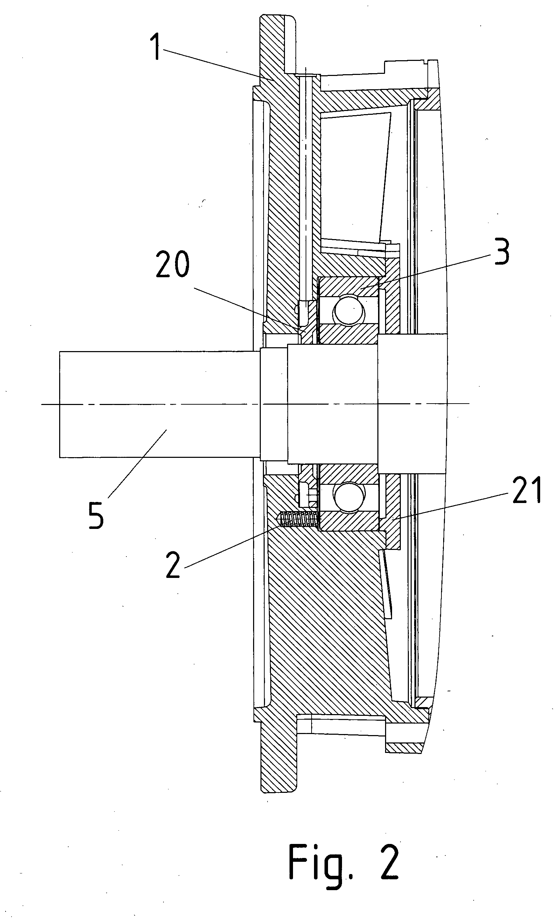

In Figur 2 hat ein in der Vertiefung angeordnetes Ringteil 20 im Normalbetrieb keine besondere Funktion. Wenn jedoch die Druckfedern ausfallen ist der Innenring durch das Ringteil 20 axial begrenzbar und somit zumindest eine gewisse Sicherheit gewährleistbar. Da in diesem Fall die Geräusche stark zunehmen, wird die defekte Vorrichtung schnell erkennbar und somit nur eine kurze Betriebszeit zum nächsten Wartungseingriff zu bestehen sein.

Die Vertiefung schließt sich also direkt im Flanschteil 1 an den Lagersitz für das Lager 3. Die Druckfedern überdecken in axialer Richtung die Vertiefung.

In der Figur 2 ist im Flanschteil 1 ein Schmierkanal 4 angeordnet, der in der genannten Vertiefung endet. Weiterer Unterschied zur Figur 1 ist, dass das Ringteil 20 zur Umlenkung des Schmierstoffes aus dem radial ausgerichteten Schmierkanal 4 in axiale Richtung auf das Lager 3 hin vorgesehen ist.

Da die Druckfedern 2 in Umfangsrichtung voneinander beabstandet sind, ist die Nachschmierbohrung mit ihrem Schmierkanal 4 in einem in Umfangsrichtung zwischen den Druckfedern 2 liegenden Bereich durchführbar. Auf diese Weise wird in axialer Richtung nur wenig Bauraum beansprucht.

Die Druckfedern 2 überdecken also in axialer Richtung den Schmierkanal 4.

Dabei sind die Druckfedern 2 in axialer Richtung orientiert, also in axialer Richtung elastisch ausgelenkt und in einer jeweiligen entsprechenden Bohrung aufgenommen.

Außerdem ist nur weniger Material zu entfernen für die Aufnahme der Druckfedern 2 im Flanschteil, da sie in radialer Richtung außerhalb des Ringteils 20 angeordnet sind und im radialen Bereich des Außenrings des Lagers 3 angeordnet sind, insbesondere ein radialer Teilbereich sowohl von den Druckfedern 2 als auch von dem Außenring des Lagers 3 überdeckt wird.

In Umfangsrichtung sind 4 bis 20 Druckfedern 2 angeordnet, vorzugsweise 6, 8 oder 10.

Zum axial innen liegenden Bereich der Vorrichtung hin ist am Lager 3 ein Lagerdeckel 21 angeordnet, mittels welchem ein Austritt von Schmierstoff, also vorzugsweise Schmierfett aus dem Bereich des Lagers 3 verhindert oder zumindest erschwert wird. Der Lagerdeckel 21 ist mit dem Flanschteil 1 schraubverbunden und im so zwischen Flanschteil 1 und Lagerdeckel 21 gebildeten Raumbereich ist das Lager 3 angeordnet.

Der von den Druckfedern 2 überdeckte axiale Bereich umfasst auch den von der Nachschmierbohrung, also von dem Schmierkanal 4, überdeckten axialen Bereich.

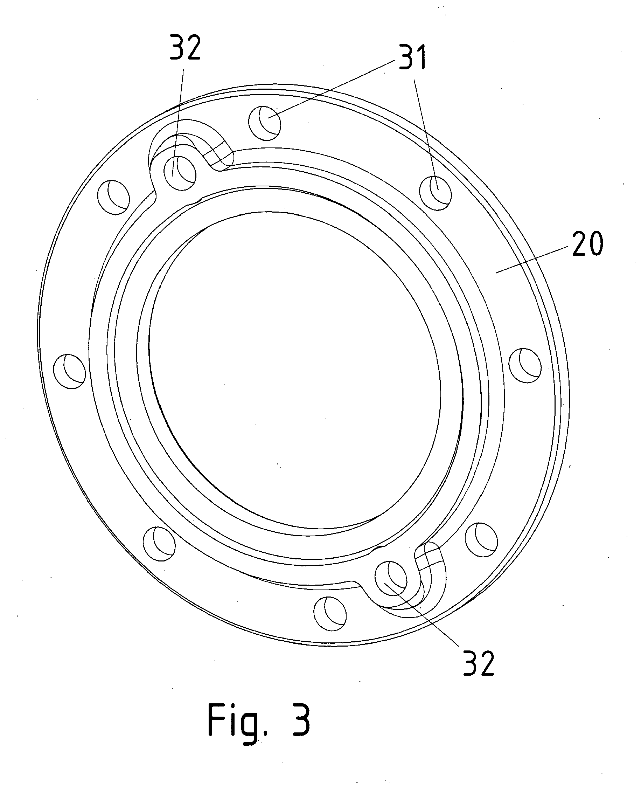

In Figur 3 ist das Ringteil 20 dargestellt, wobei die Bohrungen 31 für die Durchführung des Schmierstoffes vorgesehen sind. Nach Einfügen des Ringteils 20 in die Vertiefung des Flanschteils 1 ist ein ringförmiger Kanal gebildet, in welchen die Nachschmierbohrung, also Schmierkanal 4 mündet. Somit ist aus dem ringförmigen Kanal durch die Bohrungen 31 die Versorgung des Lagers 3 ermöglicht.

Mittels Bohrungen 32 ist das Ringteil 20 mit dem Flanschteil 1 schraubverbindbar.

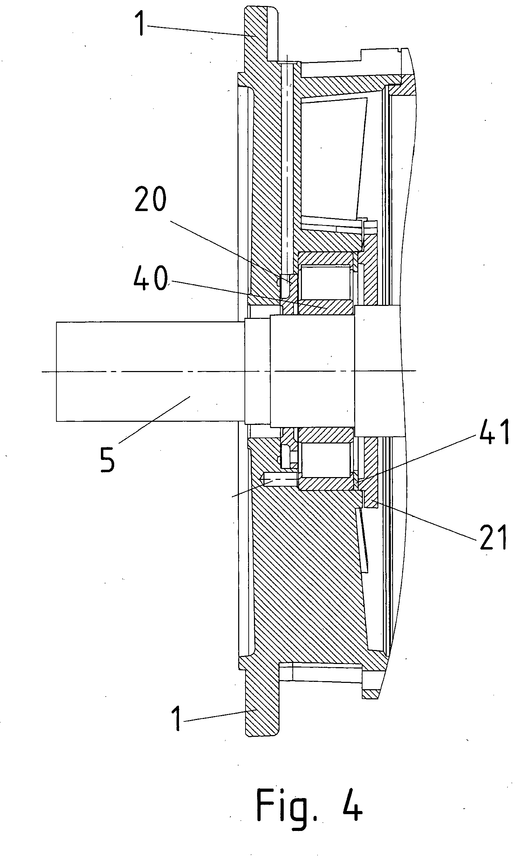

In Figur 4 ist im Unterschied zur Figur 2 das dortige als Kugellager ausgeführte Lager 3 durch ein Zylinderrollenlager 40 ersetzt.

In Figur 4 ist auch ein baugleiches Flanschteil 1 wie bei Figur 2 verwendbar. Das Lager 40 ist dabei mittels einer Stützscheibe 41 in der vom Ringteil 20 abgewandten Seite axial begrenzt. Der Außenring des Lagers 40 ist gegen eine Stufe der Stufenbohrung angestellt.

Somit sind die Druckfedern 2 nicht notwendig und die bei Einbringen der Druckfedern 2 die Druckfedern 2 aufnehmenden, im Flanschteil angeordneten Bohrungen stellen ein Speichervolumen für Schmierstoff dar.

Somit ist das gleiche Flanschteil in einem Baukasten zur Herstellung einer Baureihe von Vorrichtungen verwendbar. Dabei weist die Baureihe verschiedene Varianten von Vorrichtungen auf, welche aus einem Baukasten hergestellt werden. Somit muss im Lager nur ein Flanschteil für die Herstellung der Variante nach Figur 2 beziehungsweise für die Herstellung der Variante nach Figur 4 bevorratet werden. Je nach Variante werden verschiedene Lager, insbesondere Kugellager oder Zylinderrollenlager eingesetzt.

In einem weiteren erfindungsgemäßen Ausführungsbeispiel werden Tellerfedern zwischen Flanschteil und Lager eingesetzt, um dieses anzustellen. Dabei ist ein weiterer Unterschied zur Figur 2, dass die radiale Ausdehnung der Tellerfedern sich über den radialen Bereich des Innenrings und Außenrings des Lagers erstreckt. Somit ist aber dann die Nachschmierbohrung nicht mehr in in Umfangsrichtung voneinander beabstandeten Druckfedern 2 einbringbar sonder muss axial benachbart vorgesehen werden, was zu einem größeren, also axial verlängerten Bauraum führt.

### Bezugszeichenliste

- 1: Flanschteil
- 2: Druckfeder, insbesondere Ringfeder
- 3: Lager, insbesondere Kugellager
- 4: Schmierkanal
- 5: Welle
- 20: Ringteil
- 21: Lagerdeckel
- 31: Bohrung, insbesondere Schmierbohrung
- 32: Bohrung, insbesondere Befestigungsbohrung
- 40: Zylinderrollenlager
- 41: Stützscheibe

## Patentansprüche

1. Lageranordnung, welche zumindest eine Welle (5), ein Lager (3) mit einem Innenring, und ein Flanschteil (1) aufweist,
wobei die Welle (5) mittels des Lagers (3) gegen das Flanschteil (1) gelagert wird,
wobei das Flanschteil (1) **einen radial verlaufenden Schmierkanal (4) und** Ausnehmungen, insbesondere Bohrungen, aufweist,
**wobei in den Ausnehmungen des Flanschteils (1) Federelemente angeordnet sind zum Anstellen des Lagers (3),**
**wobei zwischen Flanschteil (1) und Lager (3) ein Ringteil (20) in einer Vertiefung des Flanschteils (1) angeordnet ist, wobei das Ringteil (20) eine derartige Ausnehmung aufweist, dass der radial verlaufende Schmierkanal (4) in axiale Richtung umgelenkt wird,**
**wobei zwischen Ringteil (20) und Flanschteil (1) eine in Umlaufrichtung verlaufende Nut gebildet ist, wobei im Ringteil (20) vorgesehene Ausnehmungen die dem Flanschteil (1) zugewandte Seite mit der dem Flanschteil (1) abgewandten Seite verbindet, insbesondere so dass durch den radial verlaufenden Schmierkanal (4) eintretender Schmierstoff mittels des Ringteils in axiale Richtung umgelenkt wird auf das Lager (3) hin,**
**wobei das Ringteil (20) mit dem Flanschteil (1) schraubverbunden ist,**
**wobei bei Ausfall der** Federelemente **(2) der Innenring durch das Ringteil (20) axial begrenzt ist.**

2. Lageranordnung nach Anspruch 1,
**dadurch gekennzeichnet, dass**
das Flanschteil (1) ein Gehäuseteil ist.

3. Lageranordnung nach mindestens einem der vorangegangenen Ansprüche,
**dadurch gekennzeichnet, dass**
die Ausnehmungen in axialer Richtung weiter ausgedehnt sind als in radialer Richtung.

4. Lageranordnung nach mindestens einem der vorangegangenen Ansprüche,
**dadurch gekennzeichnet, dass**
die Ausnehmungen in Umfangsrichtung voneinander beabstandet sind, wobei der radial verlaufende Schmierkanal (4), in Umfangsrichtung zwischen zwei zueinander nächstbenachbarten Ausnehmungen angeordnet ist, insbesondere wobei der vom Schmierkanal (4) überdeckte axiale Bereich ein Teilbereich des Bereichs, welcher von den Ausnehmungen überdeckt wird, ist oder eine nicht verschwindende Schnittmenge mit diesem Bereich aufweist.

5. Lageranordnung nach mindestens einem der vorangegangenen Ansprüche,
**dadurch gekennzeichnet, dass**
das Lager (3) bei der ersten Variante ein Kugellager und bei der zweiten Variante ein Zylinderrollenlager ist.

6. Elektromotor mit einer Lageranordnung nach einem der Ansprüche 1 bis 5.

7. Verfahren zum Herstellen von **verschiedenen** Varianten einer Baureihe von Lageranordnungen,
wobei die Lageranordnungen aus einem Baukasten zusammengesetzt werden, welcher
- **zumindest eine Welle (5),**
- **ein Lager (3),**
- **ein Flanschteil (1), und**
- **ein Ringteil (20)**
**aufweist,**
wobei jede Lageranordnung zumindest aus einer Welle (5), einem Lager (3) und einem Flanschteil (1) zusammengesetzt wird,
wobei die Welle (5) mittels eines Lagers (3) gegen das Flanschteil (1) gelagert wird,
wobei das Flanschteil (1) Ausnehmungen, insbesondere Bohrungen, aufweist,
wobei **wahlweise eine erste oder eine zweite Variante hergestellt wird,**
**wobei** in **der** ersten Variante in den Ausnehmungen des Flanschteils (1) Federelemente angeordnet sind zum Anstellen des Lagers (3),
in der zweiten Variante die Ausnehmungen des Flanschteils (1) **statt der Federelemente Schmierstoff eingefüllt wird, also die Ausnehmungen zur Aufnahme der Federelemente nur mit Schmierstoff befüllt werden zum Bevorraten von Schmierstoff,**
**wobei in der zweiten Variante zwischen Flanschteil (1) und Lager (3) ein Ringteil (20) in einer Vertiefung des Flanschteils (1) angeordnet wird, wobei das Ringteil (20) eine derartige Ausnehmung aufweist, dass ein radial verlaufende Schmierkanal (4) in axiale Richtung umgelenkt wird.**

## Claims

1. Bearing arrangement, which comprises at least one shaft (5), a bearing (3) with an inner race, and a flange part (1),
wherein the shaft (5) is mounted against the flange part (1) by means of the bearing (3),
wherein the flange part (1) has a radially extending lubrication channel (4) and recesses, in particular bores,
wherein spring elements are arranged in the recesses of the flange part (1) for adjusting the bearing (3),
wherein an annular part (20) is arranged in a depression of the flange part (1) between the flange part (1) and the bearing (3), wherein the annular part (20) has such an aperture that the radially extending lubrication channel (4) is diverted into the axial direction,
wherein a groove which extends in the circumferential direction is formed between the annular part (20) and the flange part (1), wherein apertures provided in the annular part (20) connects the side facing the flange part (1) to the side remote from the flange part (1) , in particular such that lubricant entering through the radially extending lubrication channel (4) is diverted by the annular part into the axial direction towards the bearing (3),
wherein the annular part (20) is screw-connected to the flange part (1),
wherein, in the event of failure of the spring elements (2), the inner race is bounded axially by the annular part (20).

2. Bearing arrangement according to claim 1,
**characterized in that**
the flange part (1) is a housing part.

3. Bearing arrangement according to at least one of the preceding claims,
**characterized in that**
the recesses are extended further in the axial direction than in the radial direction.

4. Bearing arrangement according to at least one of the preceding claims,
**characterized in that**
the recesses are spaced apart from one another in the circumferential direction, wherein, in the circumferential direction, the radially extending lubrication channel (4) is arranged between two recesses which are most closely adjacent to one another,
in particular wherein the axial region covered by the lubrication channel (4) is a portion of the region covered by the recesses or has a non-vanishing overlap with said region.

5. Bearing arrangement according to at least one of the preceding claims,
**characterized in that**
the bearing (3) in the first variant is a ball bearing and in the second variant is a cylindrical roller bearing.

6. Electric motor having a bearing arrangement according to one of claims 1 to 5.

7. Method for producing different variants of a model range of bearing arrangements,
wherein the bearing arrangements are assembled from a kit which comprises
- at least one shaft (5),
- a bearing (3),
- a flange part (1), and
- an annular part (20),
wherein each bearing arrangement is assembled at least from a shaft (5), a bearing (3) and a flange part (1),
wherein the shaft (5) is mounted against the flange part (1) by means of a bearing (3),
wherein the flange part (1) has recesses, in particular bores,
wherein optionally a first or a second variant is produced,
wherein in the first variant spring elements are arranged in the recesses of the flange part (1) for adjusting the bearing,
in the second variant the recesses of the flange part (1) are filled with lubricant in place of the spring elements, that is to say the recesses for accommodating the spring elements are filled only with lubricant for the purpose of storing lubricant,
wherein in the second variant an annular part (2) is arranged in a depression of the flange part (1) between the flange part (1) and the bearing (3), wherein the annular part (20) has such an aperture that a radially extending lubrication channel (4) is diverted into the axial direction.

## Revendications

1. Ensemble palier, qui présente au moins un arbre (5), un palier (3) pourvu d'une bague intérieure et un élément formant bride (1),
sachant que l'arbre (5) est monté contre l'élément formant bride (1) au moyen du palier (3),
sachant que l'élément formant bride (1) présente un canal de lubrification (4) s'étendant radialement et des évidements, en particulier des alésages,
sachant que des éléments formant ressort sont disposés dans les évidements de l'élément formant bride (1) pour la mise en place du palier (3),
sachant qu'un élément formant bague (20) est disposé entre l'élément formant bride (1) et le palier (3) dans un renfoncement de l'élément formant bride (1), sachant que l'élément formant bague (20) présente un évidement de tel type que le canal de lubrification (4) s'étendant radialement est dévié en direction axiale,
sachant qu'une rainure s'étendant en direction périphérique est formée entre l'élément formant bague (20) et l'élément formant bride (1), sachant que des évidements prévus dans l'élément formant bague (20) relient le côté tourné vers l'élément formant bride (1) au côté opposé à l'élément formant bride (1), en particulier de telle sorte que le lubrifiant pénétrant par le canal de lubrification (4) s'étendant radialement est, au moyen de l'élément formant bague, dévié en direction axiale en direction du palier (3),
sachant que l'élément formant bague (20) est relié par vis à l'élément formant bride (1), sachant qu'en cas de défaillance des éléments formant ressort (2), la bague intérieure est limitée axialement par l'élément formant bague (20).

2. Ensemble palier selon la revendication 1, **caractérisé en ce que** l'élément formant bride (1) est un élément de boîtier.

3. Ensemble palier selon au moins une des revendications précédentes, **caractérisé en ce que** les évidements sont moins étendus en direction axiale qu'en direction radiale.

4. Ensemble palier selon au moins une des revendications précédentes, **caractérisé en ce que** les évidements sont mutuellement distants en direction périphérique, sachant que le canal de lubrification (4) s'étendant radialement est disposé en direction périphérique entre deux évidements immédiatement voisins l'un de l'autre, sachant en particulier que la région axiale couverte par le canal de lubrification (4) est une région partielle de la région qui est couverte par les évidements, ou présente une intersection non infiniment petite avec cette région.

5. Ensemble palier selon au moins une des revendications précédentes, **caractérisé en ce que** le palier (3) est un roulement à billes dans la première variante et un roulement à rouleaux cylindriques dans la deuxième variante.

6. Moteur électrique avec un ensemble palier selon l'une des revendications 1 à 5.

7. Procédé de fabrication de différentes variantes d'une série d'ensembles palier,
sachant que les ensembles palier sont constitués d'un ensemble modulaire qui présente
- au moins un arbre (5),
- un palier (3),
- un élément formant bride (1) et
- un élément formant bague (20).
sachant que chaque ensemble palier est constitué au moins d'un arbre (5), d'un palier (3) et d'un élément formant bride (1),
sachant que l'arbre (5) est monté contre l'élément formant bride (1) au moyen d'un palier (3),
sachant que l'élément formant bride (1) présente des évidements, en particulier des alésages,
sachant qu'on fabrique sélectivement une première ou une deuxième variante,
sachant que dans la première variante, des éléments formant ressort sont disposés dans les évidements de l'élément formant bride (1) pour la mise en place du palier (3),
que dans la deuxième variante, les évidements de l'élément formant bride (1) sont remplis de lubrifiant à la place des éléments formant ressort, donc les évidements destinés à recevoir les éléments formant ressort sont remplis uniquement de lubrifiant aux fins d'approvisionnement en lubrifiant,
sachant que dans la deuxième variante, un élément formant bague (20) est disposé entre l'élément formant bride (1) et le palier (3) dans un renfoncement de l'élément formant bride (1), sachant que l'élément formant bague (20) présente un évidement de tel type qu'un canal de lubrification (4) s'étendant radialement est dévié en direction axiale.
